(19) Europäisches Patentamt
European Patent Office
Office européen des brevets

(11) **EP 4 421 530 A1**

(12) **EUROPEAN PATENT APPLICATION**
published in accordance with Art. 153(4) EPC

(43) Date of publication:
**28.08.2024 Bulletin 2024/35**

(21) Application number: **21961345.2**

(22) Date of filing: **19.10.2021**

(51) International Patent Classification (IPC):
***G01S 17/931*** (2020.01)

(52) Cooperative Patent Classification (CPC):
**G01S 17/931**

(86) International application number:
**PCT/JP2021/038612**

(87) International publication number:
**WO 2023/067692 (27.04.2023 Gazette 2023/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Pioneer Corporation**
  **Tokyo 113-0021 (JP)**

• **Pioneer Smart Sensing Innovations Corporation Tokyo 113-0021 (JP)**

(72) Inventor: **MATSUMARU, Makoto**
**Kawagoe-shi, Saitama 350-8555 (JP)**

(74) Representative: **Viering, Jentschura & Partner mbB**
**Patent- und Rechtsanwälte**
**Am Brauhaus 8**
**01099 Dresden (DE)**

(54) **INFORMATION PROCESSING DEVICE, CONTROL METHOD, PROGRAM, AND STORAGE MEDIUM**

(57)    A controller 13 of an information processing device 1 is configured to detect a vehicle segment, which is a segment representing a vehicle, based on measurement data outputted by a lidar 3 which is a measurement device. Then, the controller 13 is configured to set a shadow area Rs which is an area to be a blind spot of the lidar 3 due to a presence of the vehicle. Then, the controllers 13 is configured to determine, upon determining that there is a second vehicle segment within the shadow area Rs of the first vehicle segment, that the second vehicle segment is false data that is erroneously generated.

FIG. 8

**Description**

TECHNICAL FIELD

The present disclosure relates to processing of measured data.

BACKGROUND

Conventionally, there is known a laser radar device configured to radiate a pulse of laser light into a target space of detection and detect an object in the target space based on the level of the reflection light. For example, Patent Literature 1 discloses a lidar configured to scan the peripheral space by appropriately controlling the emission direction (scanning direction) of the light pulse to be repeatedly emitted and measure the return light thereby to generate point cloud data indicating peripheral object information such as distance information and reflectance information. Further, in order to determine the accurate number of background objects based on the observation data even when the observation data from a ranging device fluctuates, Patent Literature 2 discloses a technique of comparing the observation data obtained from a ranging device with distance data of a background candidate stored in a background candidate data storage unit and then counting up the number of times the background candidate of the distance data matched with the observation data is observed.

PRIOR ART DOCUMENTS

PATENT LITERATURE

Patent Literature 1: JP2018-009831A
Patent Literature 2: JP2017-207365A

SUMMARY

PROBLEM TO BE SOLVED BY THE INVENTION

If a laser light emitted by a measurement device such as a lidar is reflected at an object and thereafter irradiated to any other object, there is an issue that measurement data of the other object is erroneously generated. When using such measurement data in the object detection processing, the number of detected objects will be mistakenly determined.
The present disclosure has been made to solve the above issues, and it is an object of the present invention to provide an information processing device capable of accurately determining false data erroneously generated.

MEANS FOR SOLVING THE PROBLEM

One invention is an information processing device including:

a segment detection unit configured to detect a segment, which represents an object, from measurement data outputted by a measurement device;
an area setting unit configured to set an area to be a blind spot of the measurement device due to a presence of the object; and
a determination unit configured to determine, upon determining that there is a second segment detected by the segment detection unit within the area of a first segment detected by the segment detection unit, that the second segment is false data that is erroneously generated.

Another invention is a control method executed by a computer, the control method including:

detecting a segment, which represents an object, from measurement data outputted by a measurement device;
setting an area to be a blind spot of the measurement device due to a presence of the object; and
determining, upon determining that there is a second segment detected within the area of a first segment detected, that the second segment is false data that is erroneously generated.

Still another invention is a program causing a computer to:

detect a segment, which represents an object, from measurement data outputted by a measurement device;
set an area to be a blind spot of the measurement device due to a presence of the object; and
determine, upon determining that there is a second segment detected within the area of a first segment detected, that the second segment is false data that is erroneously generated.

BRIEF DESCRIPTION OF THE DRAWINGS

[FIG. 1] It illustrates a schematic configuration of a lidar unit according to the embodiment.
[FIG. 2] It illustrates an example of installing a lidar for measuring vehicles on a road.
[FIG. 3] It is a block diagram showing an example of a hardware configuration of an information processing device.
[FIG. 4] It illustrates an example of generating false data.
[FIG. 5] It illustrates an example of setting a shadow area.

[FIG. 6] It is a diagram clearly showing the edge point A and the edge point B of a large vehicle as base points in generating a shadow area of the large vehicle.

[FIG. 7] It schematically illustrates a method of determining whether or not a virtual vehicle is included in the shadow area.

[FIG. 8] It is an example of a flowchart showing the procedure of the vehicle detection process.

DETAILED DESCRIPTION OF PREFERRED EMBODIMENTS

According to a preferred embodiment of the present invention, the information processing device includes: a segment detection unit configured to detect a segment, which represents an object, from measurement data outputted by a measurement device; an area setting unit configured to set an area to be a blind spot of the measurement device due to a presence of the object; and a determination unit configured to determine, upon determining that there is a second segment detected by the segment detection unit within the area of a first segment detected by the segment detection unit, that the second segment is false data that is erroneously generated. According to this aspect, the information processing device can accurately determine that the second segment is false data when the second segment is erroneously generated due to the presence of an object corresponding to the first segment.

In one aspect of the information processing device, the measurement device emits lights in directions and receives the reflected lights to generate, as the measurement data, point cloud data indicating positions of measured points with respect to respective directions of emitting the lights, wherein the segment detection unit is configured to detect, as the segment, a cluster of neighboring measured points. According to this aspect, when the second segment is erroneously generated through the irradiation of another object with the light of the measurement device reflected at the object corresponding to the first segment, the information processing device can accurately determine that the second segment is false data.

In another aspect of the information processing device, the information processing device further includes an object information output unit configured to output information regarding a number of the object, based on the segment other than the segment determined to be the second segment. According to this aspect, the information processing device can output accurate information regarding the number of existing objects.

In another aspect of the information processing device, the area setting unit is configured to set, as the area, an area on a horizontal plane which is a blind spot of the measurement device due to the presence of the object. According to this aspect, the information processing device can suitably reduce the throughput in setting the area.

In another aspect of the information processing device, the area setting unit is configured to set the area based on size information of the object corresponding to the first segment. According to this aspect, the information processing device can accurately set the area, even if the measurement data of the object corresponding to the first segment is incomplete.

In another aspect of the information processing device, the information processing device further includes an object tracking unit configured to track the object detected through the measurement data obtained in time series, based on the segment other than the segment determined to be the second segment. According to this aspect, the information processing device can accurately track the existing object.

In another aspect of the information processing device, the segment detection unit is configured to detect a segment representing a vehicle as the segment representing the object. In the case of a vehicle, specular reflection and retroreflection occur due to the presence of a loading platform having an aluminum material and/or reflectors, which could cause erroneously-generated measurement data. Even in this case, the information processing device can accurately determine that the erroneously-generated measurement data is false data. In some embodiments, the area setting unit is configured to set, as the area, an area which is a blind spot of the measurement device due to a presence of, among the vehicle, a vehicle determined to be a large vehicle.

According to another preferred embodiment of the present invention, there is provided a control method executed by a computer, the control method including: detecting a segment, which represents an object, from measurement data outputted by a measurement device; setting an area to be a blind spot of the measurement device due to a presence of the object; and determining, upon determining that there is a second segment detected within the area of a first segment detected, that the second segment is false data that is erroneously generated. By executing the control method, the information processing device can accurately determine that the second segment is false data when the second segment is erroneously generated due to the presence of an object corresponding to the first segment.

According to another preferred embodiment of the present invention, there is provided a program causing a computer to: detect a segment, which represents an object, from measurement data outputted by a measurement device; set an area to be a blind spot of the measurement device due to a presence of the object; and determine, upon determining that there is a second segment detected within the area of a first segment detected, that the second segment is false data that is erroneously generated. By executing this program, the computer can accurately determine that the second segment is false data when the second segment is erroneously generated due to the presence of an object corresponding to the first segment, in some embodiments, the program is stored in a storage medium.

EMBODIMENTS

Hereinafter, a preferred embodiment of the present invention are described below with reference to drawings.

(1) Overview of Lidar Unit

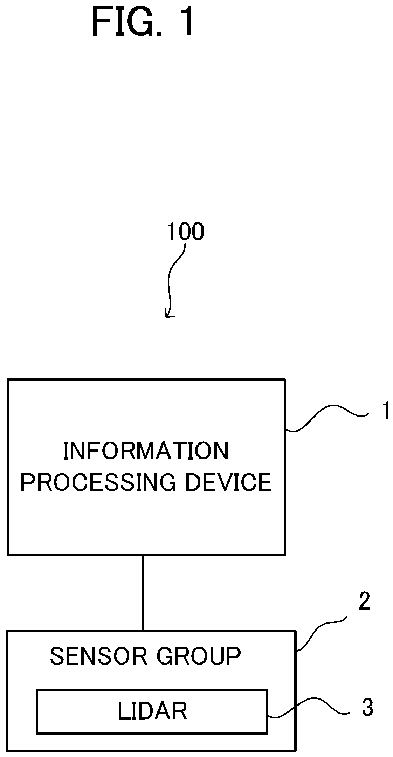

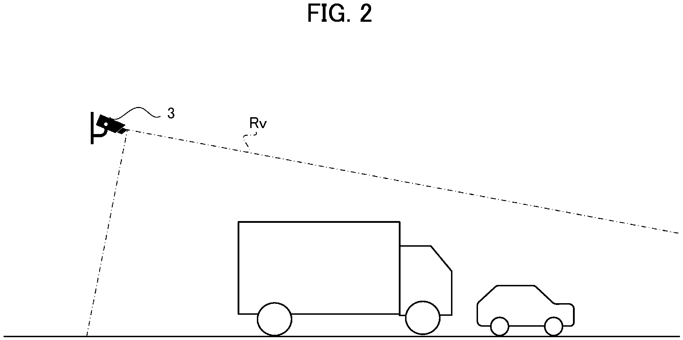

FIG. 1 is a schematic configuration of a lidar unit 100 according to the embodiment. The lidar unit 100 includes an information processing device 1 that performs processing related to data generated by a sensor group 2, and the sensor group 2 including at least a lidar (Lidar: Light Detection and Ranging, or Laser Illuminated Detection And Ranging) 3. FIG. 2 shows an installation example of the lidar 3 for measuring vehicles on a road. The lidar 3 shown in FIG. 2 is installed so as to include the road in the field of view "Rv" which is a range measurable by the lidar 3. In practice, the field of view Rv has a shape according to the maximum distance measurable by the lidar 3. Then, the lidar unit 100 detects a vehicle on the road and outputs the information on the detection result of the vehicle. In some embodiments, the lidar 3 may be installed to include a parking lot or the like in the field of view Rv, instead of being installed to include a road in the field of view Rv.

The information processing device 1 is electrically connected to the sensor group 2 and processes data outputted by various sensors included in the sensor group 2. In the present embodiment, the information processing device 1 performs process (also referred to as "vehicle detection process") of detecting vehicles on the road based on the point cloud data outputted by the lidar 3. For example, the information processing device 1 is fixedly installed in a condition of being accommodated in a housing together with the lidar 3. The information processing device 1 may be provided integrally with the lidar 3 as an electronic control device of the lidar 3 or may be provided at a position away from the lidar 3 in a state where it can communicate with the lidar 3.

The lidar 3 discretely measures the distance to an external object by emitting a pulse laser which is an infrared laser while changing the emitting angle within a predetermined angle range in the horizontal and vertical directions. In this case, the lidar 3 is equipped with a radiation unit for radiating a laser light while changing the irradiation direction (i.e., the scanning direction), a light receiving unit for receiving the reflected light (scattered light) of the radiated laser light, and an output unit for outputting data based on the received light signal outputted by the light receiving unit. The measurement data generated by the lidar 3 for each irradiation direction of the pulsed laser is generated based on the irradiation direction corresponding to the laser light received by the light receiving unit and the response delay time (i.e., Time of Flight) of the laser light which is identified by the received light signal described above. Then, for each scanning cycle, the lidar generates a frame of point cloud data that is data cloud corresponding to irradiated points in the field of view Rv of the lidar 3 (i.e., the irradiation range of the pulse laser). The lidar 3 is an example of the "measurement device" in the present invention. The lidar 3 is not limited to the above-described scan type lidar and may be a flash type lidar configured to generate three-dimensional data by diffusing and radiating a laser light to the field of view of the two-dimensional sensor array. Hereafter, the point (and its measurement data) measured through irradiation with the pulse laser emitted by the radiation unit is also referred to as "measured point".

If a vehicle (especially large vehicle) is irradiated with the laser light of the lidar 3, there are a case where specular reflection of the laser light of the lidar occurs at the vehicle due to the presence of a loading platform having an aluminum material, or a case where retroreflection of the laser light of the lidar 3 occurs at the vehicle due to the presence of a reflector which is a retroreflective material. In such a case, the laser light is reflected with a high reflectance at the vehicle and then the reflected light is radiated to any other vehicle. As a result, point cloud data (also referred to as "false data") indicating an erroneous measurement result for the other vehicle will be generated. In view of the above, the information processing device 1 according to the present embodiment accurately determines the false data and outputs the accurate vehicle detection result from which the influence of the false data is eliminated.

In some embodiments, the sensor group 2 may include various external sensors or/and internal sensors in addition to the lidar 3. For example, the sensor group 2 may include a GNSS (Global Navigation Satellite System) receiver or the like required to generate position data.

(2) Configuration of Information Processing Device

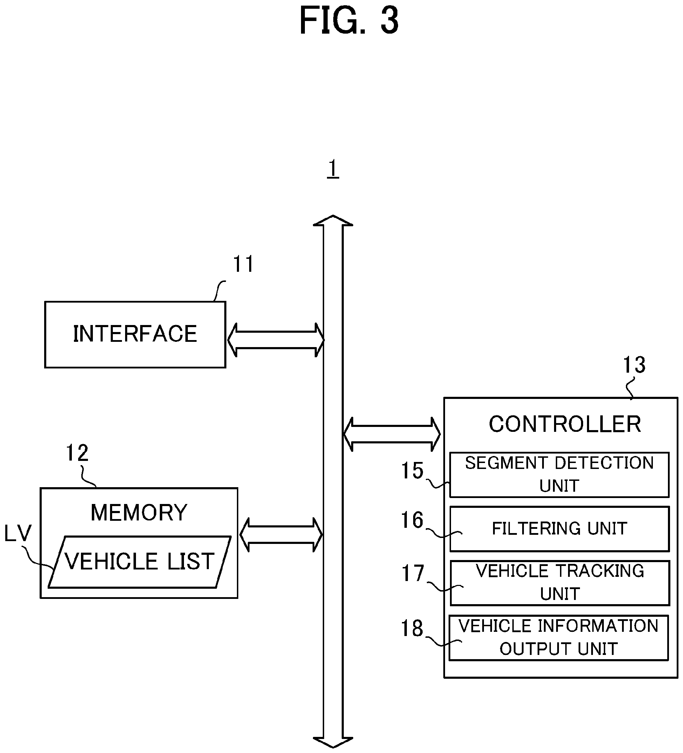

FIG. 3 is a block diagram illustrating an example of a hardware configuration of the information processing device 1. The information processing device 1 mainly includes an interface 11, a memory 12, and a controller 13. Each of these elements is connected to each other through a bus line.

The interface 11 performs the interface operation related to the transfer of data between the information processing device 1 and an external device. In this example, the interface 11 acquires the output data from the sensor group 2 such as a lidar 3, and supplies the controller 13 with the data. Examples of the interface 11 include a wireless interface, such as a network adapter, for performing wireless communication, and a hardware interface, such as a cable, for connecting to an external device. The interface 11 may also perform interface operations with various peripheral devices such as an input device, a display device, a sound output device, and the like.

The memory 12 is configured by various volatile and non-volatile memories such as a RAM (Random Access Memory), a ROM (Read Only Memory), a hard disk drive, and a flash memory, and the like. The memory 12 stores a program for the controller 13 to perform a predetermined process. The program executed by the controller 13 may be stored in a storage medium other than the memory 12.

The memory 12 also stores information necessary for the controller 13 to perform a predetermined process. For example, in the present embodiment, the memory 12 stores a vehicle list LV. The vehicle list LV, which is a list of detected vehicles, is generated for each cycle of the vehicle detection process. For example, the cycle of the vehicle detection process is a cycle (also referred to as "scanning cycle" or "frame cycle") in which the lidar 3 generates a frame of point cloud data. In this case, for example, each detected vehicle is given identification information (detected vehicle ID), and the vehicle list LV is a list of detected vehicle IDs. Here, if a detected vehicle exists at different processing times of the vehicle detection process, the detected vehicle is given the same detection vehicle ID in the event that vehicle tracking information to be described later is used. In some embodiments, various information (e.g., classification information indicating whether or not the detected vehicle is a large vehicle) regarding a detected vehicle based on the detection result of the detected vehicle may be associated, in the vehicle list LV, with the detection vehicle ID of the detected vehicle.

The controller 13 includes one or more processors, such as a CPU (Central Processing Unit), a GPU (Graphics Processing Unit), and a TPU (Tensor Processing Unit), and controls the entire information processing unit 1. In this case, the controller 13 executes a program stored in the memory 12 or the like to perform various processing described later. The controller 13 functionally includes a segment detection unit 15, a filtering unit 16, a vehicle tracking unit 17, and a vehicle information output unit 18.

The segment detection unit 15 extracts each cluster (also referred to as "segment") of data indicating neighboring positions from the point cloud data generated at the frame cycle corresponding to the current processing time and detects one or more segments (also referred to as "vehicle segments") that are estimated to represent one or more vehicles from the extracted segments. Then, the segment detection unit 15 generates the vehicle list LV based on the detection result of the vehicle segments.

In this case, the segment detection unit 15 extracts one or more segments from the point cloud data on the basis of an arbitrary clustering technique such as, for example, Euclidean Clustering, and detects one or more segments satisfying a predetermined condition from the extracted segments as vehicle segment(s). The predetermined condition described above is, for example, a condition relating to the size or shape of the segment. For example, the segment detection unit 15 detects, as a vehicle segment, a segment having a predetermined number or more of measured points constituting the segment. The segment detection unit 15 may detect the vehicle segment using a vehicle detection model that is trained based on deep learning (neural network). In this case, the vehicle detection model is, for example, a model based on instance segmentation, and is trained in advance so as to output a vehicle segment when point cloud data in a predetermined tensor format is inputted thereto. The segment detection unit 15 may further determine whether or not the detected vehicle is a large vehicle. In this case, the segment detection unit 15 may identify, as a vehicle segment representing a large vehicle, a vehicle segment satisfying a predetermined condition (e.g., a condition relating to the number of measured points) among the vehicle segments, or may identify a vehicle segment representing a large vehicle based on an inference result outputted by the above-mentioned vehicle detection model which is trained to further output classification information as to whether or not the detected vehicle is a further large vehicle.

The filtering unit 16 filters (exclude) false data that is erroneously detected as a vehicle segment. In the present embodiment, the filtering unit 16 accurately determines the false data generated by the presence of a second vehicle irradiated with the light, which is reflected at a first vehicle subject to the laser light from the lidar 3. The details of the method of determining the false data will be described later. Then, the filtering unit 16 deletes the information regarding the vehicle corresponding to the vehicle segment that is determined to be false data from the vehicle list LV.

The vehicle tracking unit 17 tracks (perform a tracking of) each vehicle in time series, based on the vehicle segment corresponding to each vehicle included in the vehicle list LV. In this case, the vehicle tracking unit 17 determines whether or not vehicle segments detected in successive frame cycles represent the same vehicle, using the point cloud data in time series and an arbitrary object tracking model. The object tracking model may be a model based on a Kalman filter, or may be a model based on deep learning. In some embodiments, the vehicle tracking unit 17 determines the representative point of the vehicle segment, and then perform tracking on the basis of the representative point. The representative point in this case may be the center of gravity of the vehicle segment or may be a measured point corresponding to a specific portion of the vehicle. In another example, the vehicle tracking unit 17 may set a bounding box for a vehicle segment and perform tracking based on the bounding box.

The vehicle information output unit 18 outputs information regarding the vehicle detected by the lidar 3. In this case, based on the result of the vehicle tracking process performed by the vehicle tracking unit 17, for example, the vehicle information output unit 18 may output information regarding the number of detected vehicles within a predetermined period, or may output information regarding the position or/and speed of each detected vehicle. In this case, in some embodiments of the output, the vehicle information output unit 18 may store the above-described information in the memory 12 or may transmit the information to a server device that collects the information regarding traveling vehicles for each road through the interface 11.

The controller 13 functions as the "segment detection unit", the "area setting unit", the "determination unit", the "object tracking unit", the "object information output unit", and a computer which executes a program.

The process performed by the controller 13 is not limited to being implemented in software by a program, but may be implemented by any combination of hardware, firmware, and software. The process performed by the controllers 13 may also be implemented using user programmable integrated circuitry such as, for example, a FPGA (Field-Programmable Gate Array) and a microcomputer. In this case, an integrated circuit may be used to implement a program that the controller 13 executes in this example.

(3) Determination of False Data

Next, a description will be given of a method of determining false data by the filtering unit 16. In summary, the filtering unit 16 sets an area (also referred to as "shadow area Rs") which is a blind spot of the lidar 3 caused by each of the vehicles corresponding to the vehicle segments detected by the segment detection unit 15, and determines that any other vehicle segment existing in the shadow area Rs is false data. Thus, the filtering unit 16 accurately detects the false data generated due to the presence of a second vehicle irradiated with the light reflected by a first vehicle subject to the laser light from the lidar 3.

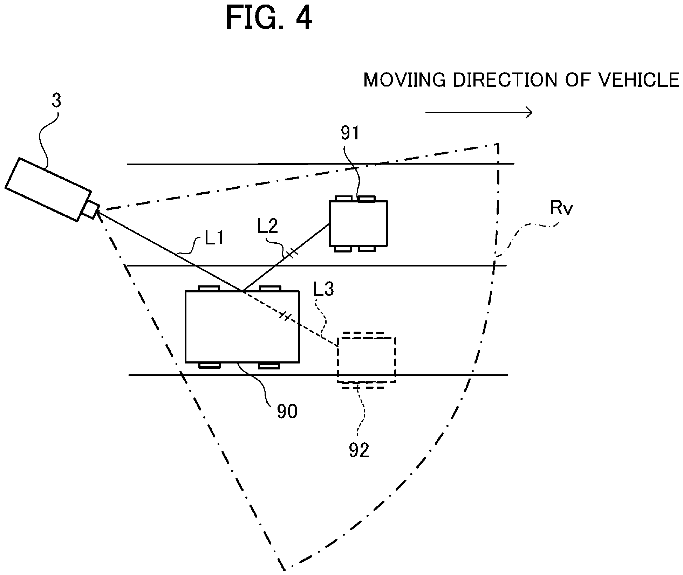

FIG. 4 shows an example of the generation of false data. In this example, the vehicle 90 which is a large vehicle and the vehicle 91 which is a normal vehicle are present in the field of view Rv and false data representing a virtual vehicle 92 (i.e., pseudo vehicle of the vehicle 91) that does not actually exist has been generated due to the presence of the vehicle 91 irradiated with the laser light from the lidar 3 which is specularly reflected by the vehicle 90. Then, the false data is erroneously detected as a vehicle segment by the segment detection unit 15.

Here, a supplementary description will be given of a process in which false data shown in FIG. 4 is generated. The laser light emitted from the lidar 3 along the line L1 is reflected at the vehicle 90, and the reflected light is radiated to the vehicle 91 along the line L2. In this instance, the laser light reflected at the vehicle 91 re-enters the lidar 3 along the line L2 and line L1. In this case, based on the response delay time of the reflected light and the emission direction of the laser light, the lidar 3 generates data of measured points at the end point (specifically, the end point opposite to the line L1) of the line L3, which has the same length as the line L2.

Thus, if the laser light reflected at the high specular reflectance portion of a first vehicle is radiated to a second vehicle, a vehicle segment of the second vehicle is falsely generated in the rear area of the first vehicle (specifically a blind spot area of the lidar 3 formed by the first vehicle).

Taking the above into consideration, the filtering unit 16 according to this example sets the shadow area Rs corresponding to each detected vehicle segment and determines that any other vehicle segment present in the shadow area Rs is false data. Since the shadow area Rs is an area which is a blind spot of the lidar 3, the point cloud data in the shadow area Rs is uniquely determined to be false data.

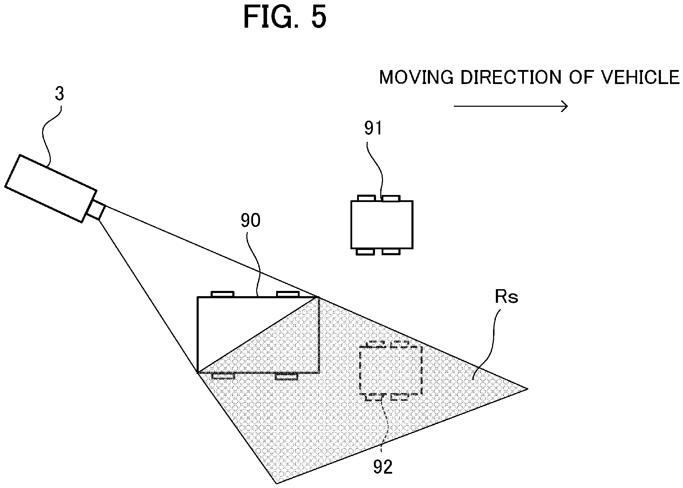

FIG. 5 shows an exemplary setting of the shadow area Rs in the situation shown in FIG. 4. In this example, when seen from the lidar 3, the area at the rear of the vehicle 90, which is a large vehicle, is set as the shadow area Rs. In other words, the shadow area Rs is a blind area of the lidar 3 formed by the vehicle 90. The shadow area Rs includes false data representing the virtual vehicle 92, which is generated due to the presence of the vehicle 91 irradiated with a reflected light from the vehicle 90. Therefore, the filtering unit 16 filters (i.e., excludes) the point cloud data (i.e., vehicle segments) present in the shadow area Rs as false data. Thus, the information processing device 1 can prevent the tracking based on the vehicle segments corresponding to vehicles that do not actually exist or outputting the vehicle information in consideration of the vehicles that do not actually exist.

Next, specific setting methods of the shadow area Rs will be described. In the following, it is assumed that the shadow area Rs is set only for vehicles determined to be large vehicles, and that the shadow area Rs is set in a two-dimensional coordinate system (that is, a two-dimensional coordinate system on the horizontal plane) without the axis in the height direction. Here, by setting the shadow area Rs only for vehicles determined to be large vehicles, it is possible to reduce the throughput as compared with the case of setting the shadow area Rs for all vehicles. In addition, a passenger vehicle that is not a large vehicle is unlikely to generate false data by reflecting the laser light of the lidar 3 into any other vehicle because a passenger vehicle generates a smaller shadow area Rs and has a smaller specular reflectance and has more curved surface shape (there is less planar portion) than a large vehicle. Further, by setting the shadow area Rs in the two-dimensional coordinate system, it is possible to suitably reduce the throughput as compared with the case of setting the shadow area Rs in the three-dimensional coordinate system.

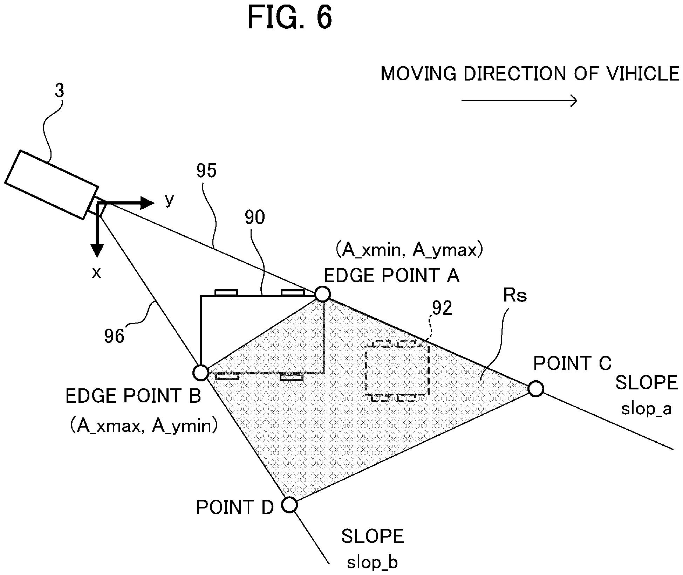

FIG. 6 is a diagram with clear indication of two edge points (edge point A and edge point B) of a vehicle 90 that become base points in generating the shadow area Rs of the vehicle 90 that is a large vehicle.

First, the filtering unit 16 sets an x-y coordinate system which is a two-dimensional coordinate system on the water surface having the position of the lidar 3 as the origin. Here, the filtering unit 16 sets the x-axis so as to be parallel to the width direction of the lane, and sets the y-axis so as to be parallel to the moving direction (i.e., the direction in which the lane extends) of the vehicle. In this way, in order to simplify the subsequent processes, the filtering unit 16 sets the x-y coordinate system based on the moving direction of the vehicle.

Next, the filtering unit 16 recognizes two edge points (edge point A and edge point B) required for setting the shadow area Rs from the vehicle segment of the vehicle 90. Here, the edge point A corresponds to a measured point based on the laser light with the smallest emission angle in the two-dimensional coordinate system on the assumption that the emission angle is a clockwise angle (or the largest emission angle on the assumption that the emission angle is a counterclockwise angle) among the measured points of the vehicle 90. The line 95 is a line connecting the origin of the of the two-dimensional coordinate system representing the position of the lidar 3 to the edge point A. Further, the edge point B corresponds to a measured point based on the laser light with the largest emission angle in the two-dimensional coordinate system on the assumption that the emission angle is a clockwise angle among the measured points of the vehicle 90. The line 96 is a line connecting the origin of the two-dimensional coordinate system representing the position of the lidar 3 to the edge point B.

To determine the edge point A and the edge point B, the filtering unit 16 identifies the maximum x-coordinate value and the maximum y-coordinate value among the measured points of the vehicle 90. Here, x-axis is parallel to the width direction of the vehicle, and, y-axis is parallel to the moving direction of the vehicle (i.e., the length direction of the vehicle). Therefore, on the assumption that the vehicle 90 is a rectangle whose longitudinal direction coincides with the moving direction, the x-coordinate value of the edge point A is the minimum value (A_xmin) among the x-coordinate values of the measured points of the vehicle 90 and the y-coordinate value of the edge point A is the maximum value (A_ymax) among the y-coordinate values of the measured points of the vehicle 90. The x-coordinate value of the edge point B becomes the maximum value (A_xmax) among the x-coordinate values of the measured points of the vehicle 90, and the y-coordinate value of the edge point B is the minimum value (A_ymin) among the y-coordinate values of the measured points of the vehicle 90.

The slope "slop_a" of the line 95 is calculated as follows based on the set of the x-coordinate value and y-coordinate value of the edge point A.

$$slop\_a = A\_ymax / A\_xmin$$

The slope "slop_b" of the line 96 is calculated as follows based on the set of the x-coordinate value and y-coordinate values of the edge point B.

$$slop\_a = A\_ymin / A\_xmax$$

In this case, the shadow area Rs is an area specified by the line segment connecting the edge point A to the edge point B, the line 95, and the line 96.

The filtering unit 16 may further perform a process of determining the depth of the shadow area Rs. For example, if the shadow area Rs is determined based on following four point, the edge points A and B, the point C on the line 95, and the point D on the line 96, the filtering unit 16 determines the position of the point C and the position of the point D based on the installation height of the lidar 3 and the height of the vehicle 90. In this case, for example, the filtering unit 16 determines the point C such that the ratio of the length between the origin (i.e. the position of the lidar 3) and the edge point A to the length between the origin and the point C coincides with the ratio of the height of the vehicle 90 to the installation height of the lidar 3. Similarly, for example, the filtering unit 16 determines the point D such that the ratio of the length between the origin and the edge point B to the length between the origin and the point D coincides with the ratio of the height of the vehicle 90 to the installation height of the lidar 3. Thus, it is possible to determine the depth of the shadow area Rs in accordance with the actual blind spot area. The determination method of the point C and the point D is not limited thereto, and the filtering unit 16 may determine the point C and the point D so that the length between the origin and the point C and the length between the origin and the point D are a predetermined length. If the depth is not considered, the point C and the point D may be determined at any positions apart from the origin by more than the maximum distance measurable by the lidar 3.

Here, a supplementary description will be given of the case where one of the edge point A and the edge point B could not be accurately detected. In general, depending on the type of vehicle, it may not be possible to accurately detect the edge point far from the sensor (for example, the edge point A having "A_ymax" in the y coordinate value). In that event, the filtering unit 16 may store size information including the typical length (for example, 12 meters) of a large vehicle in the memory 12 or the like as prior knowledge information and estimate the coordinate value of the edge point that could not be detected, based on the detected edge point and the size information. Instead of previously storing the size information of the vehicle in the memory 12, the filtering unit 16 may measure the size of the vehicle based on the measurement data outputted by an external sensor other than the lidar 3 to generate the size information described above. There is a case where the edge point A far from the sensor was close to the sensor in the past and therefore could be detected. Thus, the filtering unit 16 may estimate the coordinate value of the edge point A at the current frame from positions of the edge point A at past frames and the movement speed of the segment.

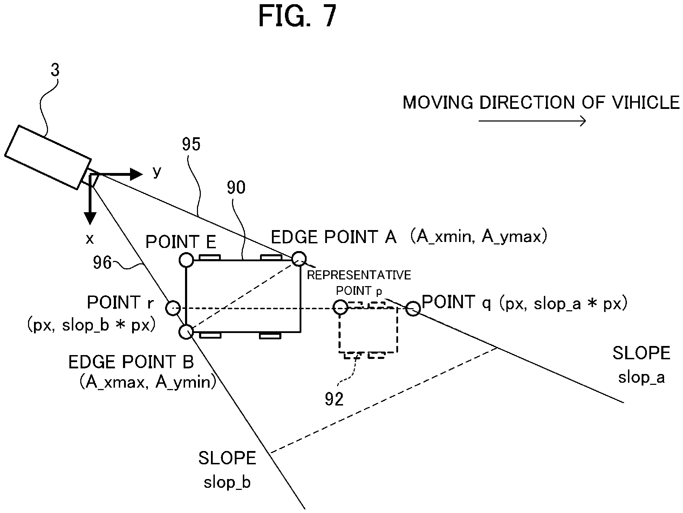

Next, a description will be given of a specific example of a method of determining whether or not a vehicle segment is included in the shadow area Rs. FIG. 7 is a diagram schematically illustrating a method of determining whether or not the virtual vehicle 92 is included in the shadow area Rs of the vehicle 90. Here, as an example, the filtering unit 16 is assumed to determine whether or not the representative point p (= (px, py)) of the vehicle segment representing the virtual vehicle 92 is included in the shadow area Rs, and the depth is not considered.

In this case, first, the filtering unit 16 sets a point q, on the line 95, having the same x-coordinate value as the representative point p, and sets a point r, on the line 96, having the same x-coordinate value as the representative point p, respectively. In this case, the coordinate value of the point q is "(px, slop_a * px)" and the coordinate value of the point r is "(px, slop_b * px)".

Then, upon determining that the representative point p exists between the point q and the point r and the representative point p is farther from the origin than the vehicle 90, the filtering unit 16 determines that the representative point p is included in the shadow area Rs. In this case, because the following two equations with attention to each y coordinate value of the point q, the point r, and the representative point p are satisfied, the filtering unit 16 determines that the representative point p exists between the point q and the point r.

$$slop\_a * px > py$$

$$slop\_b * px < py$$

Based on the following two equations representing the magnitude relation of the coordinate values between the point E of the vehicle 90 closest to the origin and the representative point p, the filtering unit 16 determines that the representative point p is further from the origin than the vehicle 90.

$$A\_xmin < px$$

$$A\_ymin < py$$

The determination method shown in FIG. 7 is an example, and the determination of whether or not the representative point p is included in the shadow area Rs may be made by use of any geometric method. In this instance, the filtering unit 16 may determine whether or not the representative point p is included in the shadow area Rs in further consideration of the depth of the shadow area Rs (i.e., the position of the point C and the point D). In another example, instead of determining whether or not the representative point p is included in the shadow area Rs, the filtering unit 16 may determine whether or not the whole vehicle segment of the virtual vehicle 92 or the bounding box of the vehicle segment of the virtual vehicle 92 is included in the shadow area Rs. In this case, for example, upon determining that a predetermined ratio or more of measured points of a vehicle segment or the bounding box of the vehicle segment are included in the shadow area Rs, the filtering unit 16 determines that the vehicle segment is false data.

In some embodiments, instead of setting the shadow area Rs in the two-dimensional coordinate system on the horizontal plane and making the determination of the presence or absence of the vehicle segment in the shadow area Rs, the filtering unit 16 may set the shadow area Rs in the three-dimensional coordinate system including the height direction and make the determination of the presence or absence of the vehicle segment in the shadow area Rs. In this instance, based on a geometric method, the filtering unit 16 identifies, as the shadow area Rs, the blind spot in the field of view Rv of the lidar 3 due to the presence of each vehicle in the three-dimensional coordinate system with respect to the lidar 3. Then, in the three-dimensional coordinate system, the filtering unit 16 determines whether or not a vehicle segment of another vehicle is included in the shadow area Rs, based on a common analysis method.

(4) Processing Flow

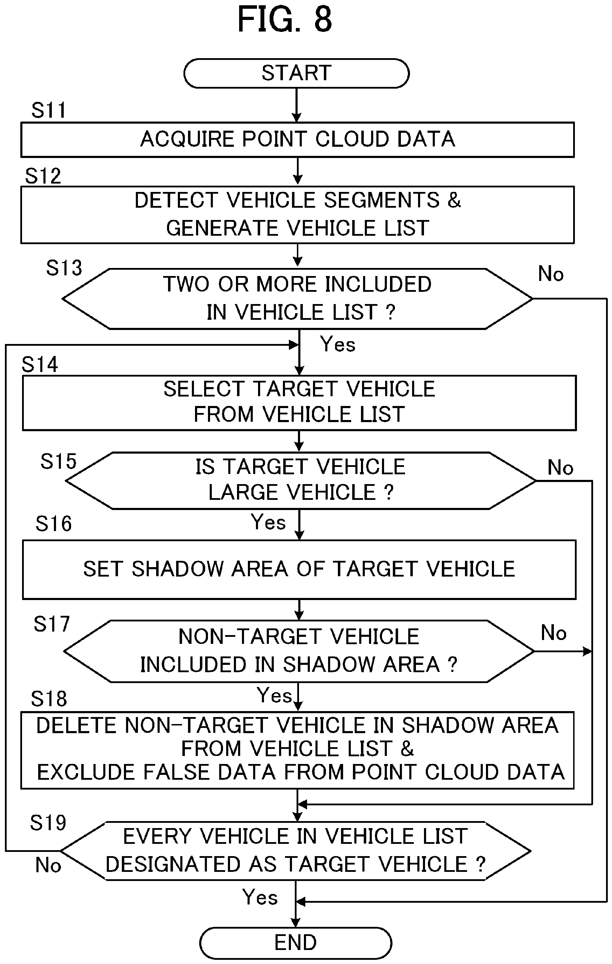

FIG. 8 is an example of a flowchart illustrating a procedure of a vehicle detection process that is executed by the information processing device 1. The information processing device 1 repeatedly executes the processing of the flowchart for each predetermined processing cycle (e.g., a frame cycle of the lidar 3).

First, the controller 13 of the information processing device 1 acquires point cloud data measured by the lidar 3 via the interface 11 (step S11). Then, the controllers 13 detect vehicle segments based on the point cloud data acquired at step S11 and generate the vehicle list LV which is the list of the detected vehicles used at the present processing cycle based on the detection result (step S12).

Next, the controller 13 determines whether there are two or more detected vehicles in the vehicle list LV generated at step S12 (step S13). Then, if there are no two or more detected vehicles in the vehicle list LV (step S13; No), the controller 13 determines that there is no vehicle segment serving as false data and terminates the process of the flowchart.

On the other hand, if there are two or more detected vehicles in the vehicle list LV (step S13; Yes), the controller 13 selects a vehicle (also referred to as "target vehicle") used for setting the shadow area Rs from the vehicle list (step S14). At this time, the target vehicle is selected in order from the vehicle closer to the sensor (here the lidar 3). In this way, the target vehicle is selected in order from the vehicle closer to the sensor. Thereby, if a non-target vehicle is included in the shadow area Rs of the present target vehicle, the non-target vehicle is deleted from the vehicle list LV, which allows for the elimination of setting the shadow area Rs of the non-target vehicle. Then, the controllers 13 determine whether or not the target vehicle is a large vehicle (step S15). Then, upon determining that the target vehicle is not a large vehicle (step S15; No), the controller 13 determines that there is no need to set a shadow area Rs for the target vehicle and proceeds to the process at step S19.

On the other hand, upon determining that the target vehicle is a large vehicle (step S15; Yes), the controller 13 sets the shadow area Rs of the target vehicle (step S16). Then, the controller 13 determines whether or not a vehicle (also referred to as "non-target vehicle") other than the target vehicle exists in the shaded area Rs set at step S16 (step S17). In this case, upon determining that there is a vehicle segment the whole part of which or the representative point of which is included in the shadow area Rs, the controllers 13 determine that there is a non-target vehicle in the shadow area Rs.

Upon determining that a non-target vehicle exists in the shadow area Rs (step S17; Yes), the controller 13 deletes the non-target vehicle in the shadow area Rs from the vehicle list LV (step S18). Then, the controller 13 regards the vehicle segment corresponding to the non-target vehicle in the shadow area Rs as false data, and exclude the false data from the point cloud data. In such a case where the controller 13 determines the representative point of the vehicle segment and tracks the determined representative point, the controller 13 excludes the representative point of the vehicle segment of the false data. In addition, the controller 13 deletes the non-target vehicle from the vehicle list LV. On the other hand, upon determining that there is no non-target vehicle in the shadow area Rs (step S17; No), the controller 13 proceeds to the process at step S19.

Then, the controller 13 determines whether or not every vehicle in the vehicle list LV has been designated as the target vehicle (step S19). Upon determining that every vehicle in the vehicle list LV has been designated as the target vehicle (step S19; Yes), the controller 13 terminates the process of the flowchart. On the other hand, upon determining that there is a vehicle that is not designated as the target vehicle in the vehicle list LV (step S19; No), the controller 13 gets back to the process at step S14 and selects a vehicle that is not designated as the target vehicle as the target vehicle.

(5) Modification

The lidar unit 100 may be mounted on the vehicle. In this instance, the lidar 3 is provided in a vehicle, and the information processing device 1 is an in-vehicle device of the vehicle or an electronic control device (ECU: Electronic Control Unit) incorporated in the vehicle. In this case, the information processing device 1 detects a vehicle in the vicinity of the vehicle equipped with the lidar unit 100 based on the point cloud data generated by the lidar 3. In this case, the information processing device 1 accurately detects the false data generated by the presence of the vehicle irradiated with the light reflected at the vehicle subject to the laser light from the lidar 3, thereby preventing false detection of the vehicle.

As described above, the controller 13 of the information processing device 1 according to the embodiment is configured to detect a vehicle segment, which is a segment representing a vehicle, based on measurement data outputted by a lidar 3 which is a measurement device. Then, the controller 13 is configured to set a shadow area Rs which is an area to be a blind spot of the lidar 3 due to a presence of the vehicle. Then, the controllers 13 is configured to determine, upon determining that there is a second vehicle segment within the shadow area Rs of the first vehicle segment, that the second vehicle segment is false data that is erroneously generated. Thus, the information processing device 1 can accurately determine the false data.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

DESCRIPTION OF REFERENCE NUMERALS

1       Information processing device
2       Sensor group
3       Lidar

100    Lidar unit

**Claims**

1.   An information processing device comprising:

a segment detection unit configured to detect a segment, which represents an object, from measurement data outputted by a measurement device;
an area setting unit configured to set an area to be a blind spot of the measurement device due to a presence of the object; and
a determination unit configured to determine, upon determining that there is a second segment detected by the segment detection unit within the area of a first segment detected by the segment detection unit, that the second segment is false data that is erroneously generated.

2.   The information processing device according to claim 1,

wherein the measurement device emits lights in directions and receives the reflected lights to generate, as the measurement data, point cloud data indicating positions of measured points with respect to respective directions of emitting the lights, and
wherein the segment detection unit is configured to detect, as the segment, a cluster of neighboring measured points.

3.   The information processing device according to claim 1 or 2, further comprising
an object information output unit configured to output information regarding a number of the object, based on the segment other than the segment determined to be the second segment.

4.   The information processing device according to any one of claims 1 to 3,
wherein the area setting unit is configured to set, as the area, an area on a horizontal plane which is a blind spot of the measurement device due to the presence of the object.

5.   The information processing device according to any one of claims 1 to 4,
wherein the area setting unit is configured to set the area based on size information of the object corresponding to the first segment.

6.   The information processing device according to any one of claims 1 to 5, further comprising
an object tracking unit configured to track the object detected through the measurement data obtained in time series, based on the segment other than the segment determined to be the second segment.

7.   The information processing device according to any one of claims 1 to 6,
wherein the segment detection unit is configured to detect a segment representing a vehicle as the segment representing the object.

8.   The information processing device according to claim 7,
wherein the area setting unit is configured to set, as the area, an area which is a blind spot of the measurement device due to a presence of, among the vehicle, a vehicle determined to be a large vehicle.

9.   A control method executed by a computer, the control method comprising:

detecting a segment, which represents an object, from measurement data outputted by a measurement device;
setting an area to be a blind spot of the measurement device due to a presence of the object; and
determining, upon determining that there is a second segment detected within the area of a first segment detected, that the second segment is false data that is erroneously generated.

10.  A program causing a computer to:

detect a segment, which represents an object, from measurement data outputted by a measurement device;
set an area to be a blind spot of the measurement device due to a presence of the object; and
determine, upon determining that there is a second segment detected within the area of a first segment detected, that the second segment is false data that is erroneously generated.

11.  A storage medium storing the program according to claim 10.

# FIG. 1

100

INFORMATION
PROCESSING DEVICE

1

SENSOR GROUP

2

LIDAR

3

FIG. 2

# FIG. 3

# FIG. 4

MOVIING DIRECTION OF VEHICLE

# FIG. 5

MOVING DIRECTION OF VEHICLE

# FIG. 6

MOVING DIRECTION OF VIHICLE

3

95

90

y

x

96

(A_xmin, A_ymax)
EDGE POINT A

92

Rs

POINT C
SLOPE
slop_a

EDGE POINT B
(A_xmax, A_ymin)

POINT D

SLOPE
slop_b

# FIG. 7

3

MOVING DIRECTION OF VIHICLE

95

90

y

x

96

POINT E

EDGE POINT A (A_xmin, A_ymax)

REPRESENTATIVE
POINT p

POINT r
(px, slop_b * px)

POINT q (px, slop_a * px)

EDGE POINT B
(A_xmax, A_ymin)

SLOPE
slop_a

92

SLOPE
slop_b

# FIG. 8

START

S11
ACQUIRE POINT CLOUD DATA

S12
DETECT VEHICLE SEGMENTS &
GENERATE VEHICLE LIST

S13
TWO OR MORE INCLUDED
IN VEHICLE LIST ?  — No

Yes

S14
SELECT TARGET VEHICLE
FROM VEHICLE LIST

S15
IS TARGET VEHICLE
LARGE VEHICLE ?  — No

Yes

S16
SET SHADOW AREA OF TARGET VEHICLE

S17
NON-TARGET VEHICLE
INCLUDED IN SHADOW AREA ?  — No

Yes

S18
DELETE NON-TARGET VEHICLE IN SHADOW AREA
FROM VEHICLE LIST &
EXCLUDE FALSE DATA FROM POINT CLOUD DATA

S19
EVERY VEHICLE IN VEHICLE LIST
DESIGNATED AS TARGET VEHICLE ?

No

Yes

END

## INTERNATIONAL SEARCH REPORT

| | International application No. |
|---|---|
| | **PCT/JP2021/038612** |

**A.    CLASSIFICATION OF SUBJECT MATTER**

*G01S 17/931*(2020.01)i
FI:    G01S17/931

According to International Patent Classification (IPC) or to both national classification and IPC

**B.    FIELDS SEARCHED**

Minimum documentation searched (classification system followed by classification symbols)

G01S7/00-17/95; G08G1/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2021-076422 A (NISSAN MOTOR et al.) 20 May 2021 (2021-05-20)<br>paragraphs [0001]-[0043], fig. 1-5 | 1-11 |
| Y | WO 2007/094064 A1 (MITSUBISHI ELECTRIC CORP) 23 August 2007 (2007-08-23)<br>paragraph [0015] | 1-11 |
| Y | JP 2001-116839 A (FUJITSU TEN LTD) 27 April 2001 (2001-04-27)<br>column "abstract" | 1-11 |
| Y | JP 2017-015448 A (DENSO CORP) 19 January 2017 (2017-01-19)<br>paragraph [0013], fig. 1-3 | 7-8 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A"  document defining the general state of the art which is not considered to be of particular relevance | |
| "E"  earlier application or patent but published on or after the international filing date | "X" document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&" document member of the same patent family |

| Date of the actual completion of the international search | Date of mailing of the international search report |
|---|---|
| **18 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2021/038612** |

| Patent document cited in search report | | | Publication date (day/month/year) | Patent family member(s) | Publication date (day/month/year) |
|---|---|---|---|---|---|
| JP | 2021-076422 | A | 20 May 2021 | (Family: none) | |
| WO | 2007/094064 | A1 | 23 August 2007 | (Family: none) | |
| JP | 2001-116839 | A | 27 April 2001 | (Family: none) | |
| JP | 2017-015448 | A | 19 January 2017 | (Family: none) | |

Form PCT/ISA/210 (patent family annex) (January 2015)

**EP 4 421 530 A1**

**Patent documents cited in the description**

- JP 2018009831 A
- JP 2017207365 A